Europäisches Patentamt

**European Patent Office**

Office européen des brevets

(19)

(11) Numéro de publication: **0 066 319**
**B1**

(12) # FASCICULE DE BREVET EUROPEEN

(45) Date de publication du fascicule du brevet:
**27.08.86**

(51) Int. Cl.⁴: **G 01 S 7/06,** G 01 S 7/12,
G 06 F 13/00

(21) Numéro de dépôt: **82200573.2**

(22) Date de dépôt: **11.05.82**

(54) **Dispositif d'oubli pour invalider des informations contenues dans une mémoire depuis un certain temps et radar comportant un tel dispositif.**

(30) Priorité: **15.05.81 FR 8109713**

(43) Date de publication de la demande:
**08.12.82 Bulletin 82/49**

(45) Mention de la délivrance du brevet:
**27.08.86 Bulletin 86/35**

(84) Etats contractants désignés:
**DE FR GB IT NL**

(56) Documents cités:
**FR - A - 2 357 036**
**US - A - 3 541 529**
**US - A - 3 821 735**
**US - A - 3 964 064**
**US - A - 4 208 657**

(73) Titulaire: **SOCIETE D'OPTIQUE, DE MECANIQUE D'ELECTRICITE ET DE RADIO O.M.E.R.A. - S.E.G.I.D., 49, rue Ferdinand Berthoud, F-95100 Argenteuil (FR)**
(84) Etats contractants désignés: **FR**

(73) Titulaire: **N.V. Philips' Gloeilampenfabrieken, Groenewoudseweg 1, NL-5621 BA Eindhoven (NL)**
(84) Etats contractants désignés: **DE GB IT NL**

(72) Inventeur: **Guiglini, Jean-Yves Maurice, Société Civile S.P.I.D. 209, rue de l'Université, F-75007 Paris (FR)**

(74) Mandataire: **Chaffraix, Jean et al, Société Civile S.P.I.D. 209, rue de l'Université, F-75007 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un dispositif d'oubli pour invalider des informations contenues depuis un certain temps dans une mémoire dite principale à laquelle sont rattachés des circuits d'adressage de lecture, des circuits d'adressage d'écriture et un circuit de commande de lecture-écriture.

Un tel dispositif peut trouver d'importantes applications lorsqu'on estime que des informations enregistrées dans une mémoire depuis un temps jugé trop long ne sont plus valides et qu'il y a lieu donc de ne plus les prendre en compte.

Pour cela, un dispositif du genre mentionné dans le préambule est remarquable en ce qu'il est formé par un générateur de rythme d'oubli fournissant des signaux dont la période correspond audit certain temps, par deux mémoires dites d'oubli dont les entrées d'adressage sont couplées auxdits circuits d'adressage de lecture et d'écriture, par un circuit d'écriture coopérant avec le circuit de commande de lecture-écriture pour écrire un signal de mise à jour dans les deux mémoires d'oubli en même temps que la mémoire principale est écrite, par un circuit d'effacement commandé avec le générateur d'oubli pour inscrire tour à tour dans l'une des mémoires d'oubli après le certain temps un signal d'effacement, et par un circuit de coïncidence de signaux d'effacement branché en sortie des mémoires d'oubli pour commander un circuit d'invalidation branché en sortie de la mémoire principale.

L'invention concerne aussi l'utilisation d'un tel dispositif dans un radar formé d'une partie émission pour émettre des impulsions à haute fréquence par l'intermédiaire d'un agencement d'antenne mobile auquel est couplé un capteur de position, d'une partie réception pour recevoir par l'intermédiaire dudit agencement d'antenne lesdites impulsions après réflexion sur des obstacles, d'une mémoire d'image pour enregistrer lesdites impulsions en des emplacements définis au moyen du capteur de position et d'un circuit de visualisation pour fournir à un tube cathodique de visualisation des informations prélevées de ladite mémoire principale à un rythme nécessaire pour obtenir une bonne visualisation. Dans ce cas la mémoire d'image constitue ladite mémoire principale.

Les radars de ce genre ne nécessitent pas de tube cathodique à longue rémanence puisque la lecture de la mémoire d'image à une cadence rapide permet de visualiser une image de bonne luminance.

L'avantage apporté par la présence du dispositif d'oubli est que l'agencement d'antenne peut effectuer, en fonction des besoins du moment, un balayage circulaire ou par secteurs d'ouvertures et d'axes quelconques. Les zones qui ne sont plus balayées ne doivent plus apparaître sur l'écran du tube cathodique, ce qui est obtenu par le dispositif d'oubli.

La description suivante faite en regard des dessins annexés, le tout donné à titre d'exemple non limitatif, fera bien comprendre comment l'invention peut être réalisée.

La figure 1 représente un dispositif d'oubli conforme à l'invention.

La figure 2 montre en détail une partie du dispositif d'oubli conforme à l'invention.

La figure 3 montre, pour des signaux à rythme lent, un diagramme temps utilisé pour expliquer le fonctionnement du dispositif d'oubli conforme à l'invention.

La figure 4 montre, pour des signaux à rythme rapide, un diagramme temps utilisé pour expliquer le fonctionnement du dispositif d'oubli conforme à l'invention.

La figure 5 montre un radar conforme à l'invention.

La figure 6 montre en a et b schématiquement les aspects d'images de visualisation pour deux balayages différents.

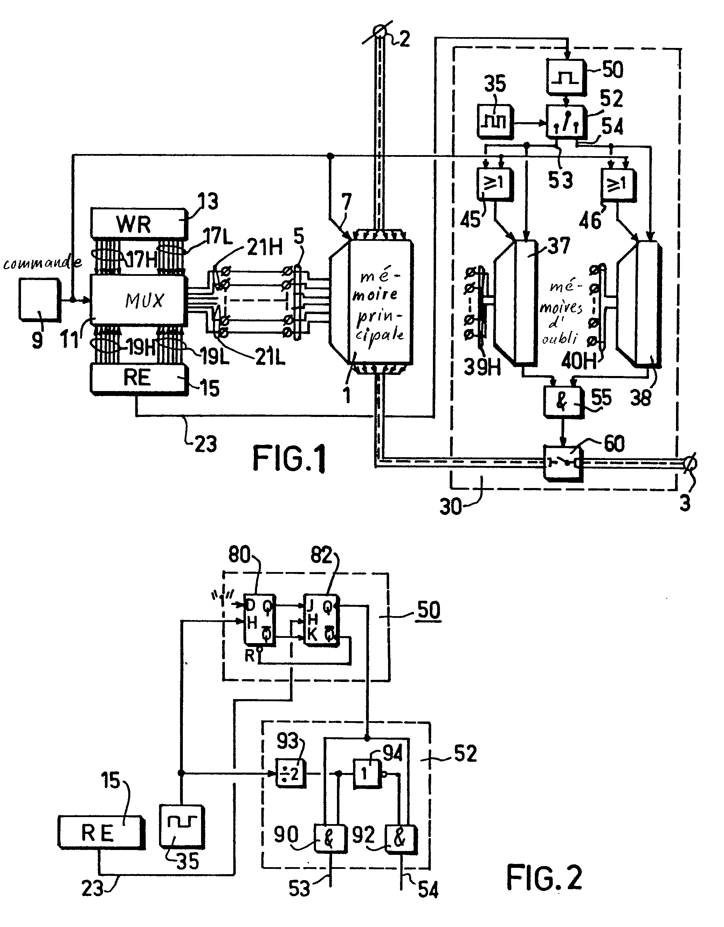

A la figure 1, la référence 1 indique une mémoire principale destinée à emmagasiner des données présentes sur une borne d'entrée 2 et à les restituer sur une borne 3. Cette mémoire 1 est munie d'un ensemble 5 d'entrées pour codes d'adresse et d'une commande 7 de lecture-écriture. Cette commande 7 est reliée à la sortie d'un circuit de commande de lecture-écriture 9 qui fournit aussi ses signaux de commande à un multiplexeur 11. Les premières entrées de ce multiplexeur 11 sont reliées aux sorties d'un circuit d'adressage d'écriture 13 et les deuxièmes, aux sorties d'un circuit d'adressage de lecture 15. Lorsque le circuit 9 fournit un certain signal logique «1», par exemple, la mémoire principale 1 est mise en mode écriture et le code fourni par le circuit d'adressage d'écriture 13 est rendu disponible aux sorties du multiplexeur 11. Lorsque le circuit 9 fournit le signal logique opposé «0», la mémoire principale 1 est mise en position lecture et c'est au tour du code fourni par le circuit d'adressage de lecture 15 qui est rendu disponible aux sorties du multiplexeur. Les codes d'adresse fournis par le circuit 13 apparaissent sur deux séries de fils 17L et 17H. Les fils 17H transmettent les éléments binaires de fort poids du code d'adresse, tandis que les fils 17L transmettent les éléments de faible poids. De manière analogue, les codes d'adresse fournis par le circuit d'adressage de lecture apparaissent sur deux séries de fils 19L et 19H, les fils 19H transmettent les éléments binaires de fort poids et les fils 19L de faible poids.

Il existe actuellement deux types principaux de mémoires vives à accès aléatoire: les mémoires recevant le code d'adresse sur des fils dont le nombre est égal au nombre d'éléments binaires constituant ce code et les mémoires à adressage multiplexé. Pour ces dernières mémoires le code d'adresse est présenté en deux temps, le nombre de fils est réduit de moitié.

Si les mémoires utilisées reçoivent le code d'adresse sans multiplexage, les fils de sortie du multiplexeur seront aussi nombreux que ceux de chacune des entrées (17 et 19), de ce fait les deux séries de fils seront reliées aux entrées 5 de la mémoire 1.

Si les mémoires utilisées ont un adressage multiplexé, le multiplexeur 11 sera conçu pour fournir, en deux temps, le code d'adresse. Il n'y a plus lieu de distinguer les séries de fils 21H et 21L, tous les fils 21 sont reliés aux entrées 5 de la mémoire 1.

Le circuit d'adressage de lecture 15 fournit sur un fil 23 un signal de fin de lecture de la mémoire 1. Si le circuit 15 est constitué par un compteur, le fil 23 sera connecté à la sortie où est rendu disponible le signal de fin de comptage.

Le dispositif d'oubli conforme à l'invention portant la référence 30 sur cette figure 1 a pour but d'invalider à la sortie de la mémoire 1 les données qui auraient été enregistrées depuis un certain temps jugé trop long.

Pour cela, le dispositif d'oubli 30 est formé par un générateur de rythme d'oubli 35 fournissant des signaux dont la période correspond audit certain temps, par deux mémoires 37 et 38 dites mémoires d'oubli dont les entrées de code d'adressage 39H pour la première et 40H pour la seconde sont reliées aux fils 21 (quand on a affaire à des mémoires nécessitant un adressage multiplexé dans le temps, la totalité des fils d'adresse est utilisée; si ce n'est pas le cas, seuls les fils 21H sont connectés aux entrées 39H et 40H).

Le dispositif d'oubli 30 est aussi formé par un circuit d'écriture comportant les portes OU 45 et 46 à deux entrées dont une première entrée est connectée à la sortie du circuit 9 et dont la sortie est reliée à la commande de mise en position écriture de la mémoire 37 en ce qui concerne la porte 45 et la même commande de la mémoire 38 en ce qui concerne la porte 46. Le dispositif d'oubli est formé encore par un circuit d'effacement comportant un générateur de signal de validation d'effacement 50 fournissant un signal d'une certaine valeur logique (dans cet exemple, c'est un «1» logique), un commutateur 52 muni de sorties 53 et 54 pour appliquer ce signal de validation d'effacement alternativement aux entrées des mémoires 37 et 38 et pour forcer en position écriture pendant la durée de ce signal de validation la mémoire d'oubli qui reçoit ce signal; cette mémoire d'oubli enregistre ainsi un signal de mise à jour. Ce forçage se fait par l'intermédiaire des portes OU 45 et 46, la deuxième entrée des portes 45 et 46 étant branchée aux sorties 53 et 54. Le circuit 30 est formé, enfin, par un circuit de coïncidence des signaux d'effacement issus des mémoires 37 et 38; ce circuit est constitué par une porte ET 55 pour commander un circuit d'invalidation 60 branché en sortie de la mémoire 1. Ce circuit 60 formé de circuits logiques est conçu pour fournir à ses sorties des signaux «0» lorsqu'il est activé.

La figure 2 montre plus en détail le générateur 50 et le circuit 52. Le générateur de signal de validation d'effacement 50 est constitué par deux bascules 80 et 82; la bascule 80 est une bascule de type D, tandis que la bascule 82 est une bascule de type JK. L'entrée D de la bascule 80 reçoit en permanence le signal logique «1»; les sorties Q et Q̄ de cette dernière bascule sont reliées respectivement aux entrées J et K de la bascule 82; là sortie Q de la bascule 82 est branchée à l'entrée du commutateur 52, tandis que la sortie Q̄ est connectée à l'entrée R de mise à zéro de la bascule 80. Les entrées d'horloge H de ces bascules 80 et 82 sont respectivement connectées à la sortie du générateur de rythme d'oubli 35 et au fil 23. Ce générateur 50 fonctionne de la manière suivante.

On admet que les valeurs des signaux logiques aux sorties des bascules 80 et 82 sont «0» et que les bascules 80 et 82 sont sensibles aux fronts montants des signaux. Tant que le signal à la sortie Q de la bascule 80 est «0», les fronts montants des signaux appliqués à l'entrée H de la bascule 82 sont sans effet sur le signal de sortie de cette dernière.

Lorsqu'un signal montant est appliqué à l'entrée H de la bascule 80, le signal à la sortie Q devient aussi égal à «1», de sorte que dès qu'un signal à front montant surgit sur le fil 23, le signal à la sortie de la bascule 82 prend la valeur «1»; de plus, la bascule 80 est remise à l'état «0», ainsi, au prochain front montant du signal à la sortie du circuit 15, cette bascule sera remise à l'état «0».

Le circuit commutateur 52 est formé de deux portes ET 90 et 92 dont les sorties constituent les sorties 53 et 54 de ce circuit 52. Une première entrée de la porte 90 est reliée, d'une part, à la sortie d'un diviseur de fréquence par deux portant la référence 93 et, d'autre part, à l'entrée d'un inverseur 94 dont la sortie est branchée à une première entrée de la porte 92. L'entrée du diviseur 93 est branchée à la sortie du générateur 35. Les deuxièmes entrées des portes 90 et 92 sont reliées à la sortie du générateur 50.

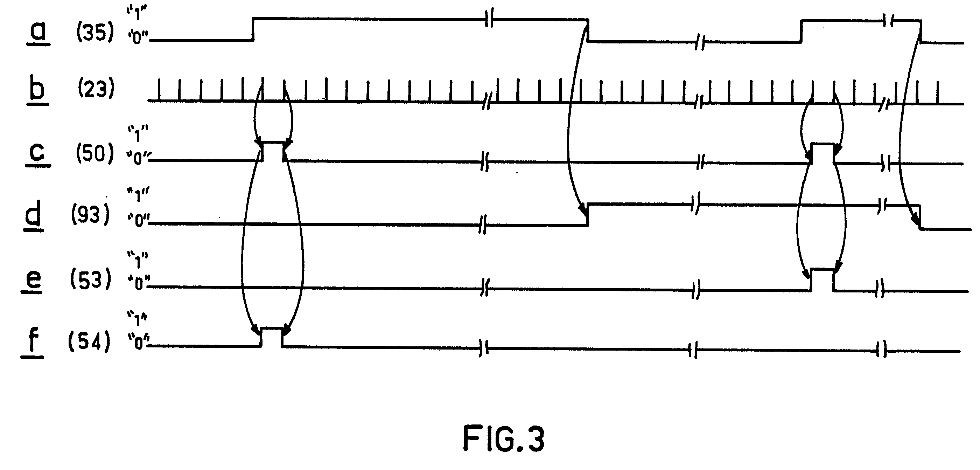

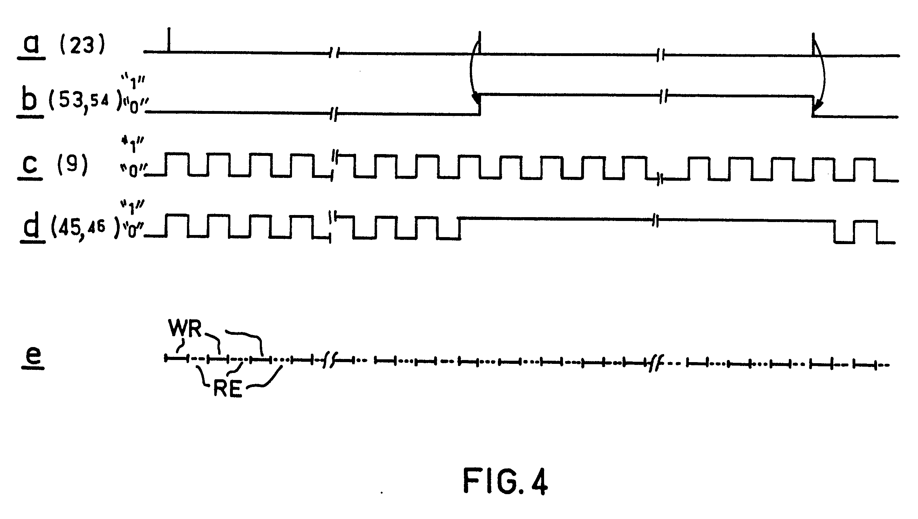

Il est possible maintenant d'expliquer le fonctionnement du dispositif de l'invention. Le circuit de commande de lecture-écriture 9 fournit des signaux à un rythme rapide de l'ordre de quelques microsecondes, tandis que la période des signaux du générateur d'oubli est de l'ordre de quelques secondes. Pour expliquer le fonctionnement, on utilise les figures 3 et 4 qui sont des diagrammes temps. Le diagramme temps représenté à la figure 3 est plutôt lié au rythme du générateur d'oubli, celui de la figure 4 au rythme du circuit de commande de lecture-écriture 9. Sur ces figures 3 et 4, on a porté, en regard de chaque ligne entre parenthèses, la référence de l'élément qui est concerné pa le signal en question.

La ligne a de la figure 3 illustre le rythme d'oubli, c'est-à-dire que l'on a fait figurer sur cette ligne a l'allure des signaux fournis par le générateur 35. Ces signaux ont, comme on l'a dit ci-dessus, une période de plusieurs secondes; un temps égal à deux fois cette période fixe le temps d'oubli, c'est-à-dire que, si pendant ce temps aucune écriture n'a eu lieu dans une zone de la mémoire définie par les poids forts du code dans le cas d'une mémoire 1 ne nécessitant pas un code d'adressage multiplexé dans le temps, l'information contenue dans cette zone lors de la lecture sera invalidée. Les traits verticaux portés à la ligne b représentent les signaux de fin de lecture fournis par le circuit d'adressage de lecture 15 et rendus disponibles sur le fil 23. Entre l'apparition de deux signaux sur le fil 23, le code d'adresse sur les fils 19H et 19L a pris toutes les configurations possibles pendant les temps où le signal fourni par le générateur 9 commande la position lecture. La ligne c représente le signal de sortie du générateur 50 de validation d'effacement; ce signal est au niveau «1» logique pendant une période des signaux de fin de lecture (ligne b, figure 3) après chaque front montant des signaux provenant du générateur 35. La ligne d représente le signal de sortie du diviseur de fréquence 93 (figure 2). Ce signal change de valeur à chaque front descendant du signal du générateur 35. La valeur du signal de sortie du diviseur 93 détermine laquelle des portes 90 et 92 est rendue passante. Ainsi, lorsque ce signal a la valeur «0», l'impulsion de validation d'effacement destinée à la mémoire 38 apparaît sur le fil 54 (ligne f, figure 3) et lorsqu'il a la valeur «1», l'impulsion pour la mémoire 37 apparaît sur le fil 53 (ligne e, figure 3).

A la ligne a de la figure 4, on représente à nouveau, mais à une échelle de temps plus dilatée, les signaux présents sur le fil 23 et à la ligne b, de la même manière, les signaux présents sur la sortie 53 (ou 54 respectivement); à la ligne c, les signaux de rythme rapide représentés sont ceux fournis par le circuit de commande de lecture-écriture 9. Lorsque le signal est au niveau «1», les mémoires sont mises en position écriture et lorsque le signal est au niveau «0», les mémoires sont mises en position lecture. Pour bien montrer ces différentes positions, on a dessiné des segments en traits pleins repérés par WR les temps pendant lesquels il peut y avoir écriture et par des segments en pointillé repérés par RE les temps pendant lesquels il y a lecture (ligne e).

A la ligne c de cette figure 4, le signal sortant de la porte 45 (ou 46) commande la position écriture ou lecture de la mémoire 37 (38). Tant que le signal sur la sortie 53 est au niveau «0», la mémoire 37 est mise en position lecture ou écriture, comme la mémoire principale 1; donc chaque fois qu'une donnée nouvelle est écrite dans la mémoire 1, un signal de mise à jour (un «0») est écrit dans la zone correspondante de la mémoire 37. Par contre, lorsque le signal sur le fil 53 a la valeur logique «1», le signal à la sortie de la porte 45 prend la valeur «1» et met la mémoire 37 en position écriture. Elle reste en position écriture le temps que le code d'adresse de lecture sur les fils 19H et 19L prenne toutes les configurations possibles. Alors, lorsque le signal sur la sortie 53 reprend la valeur «0», la valeur logique «1» a été écrite dans la totalité de la mémoire 37. Donc, toutes les cases des mémoires 37 et 38 correspondant aux zones de la mémoire 1 dans lesquelles il n'y a pas eu d'écriture entre deux apparitions d'un signal «1» à la sortie du générateur 50, contiennent simultanément une donnée représentant un «1» logique après la deuxième apparition. La porte 55 détectera, lors de la lecture desdites zones de la mémoire 1, la coïncidence de deux «1»

aux sorties des mémoires 37 et 38 et commandera la mise en action du circuit d'invalidation 60.

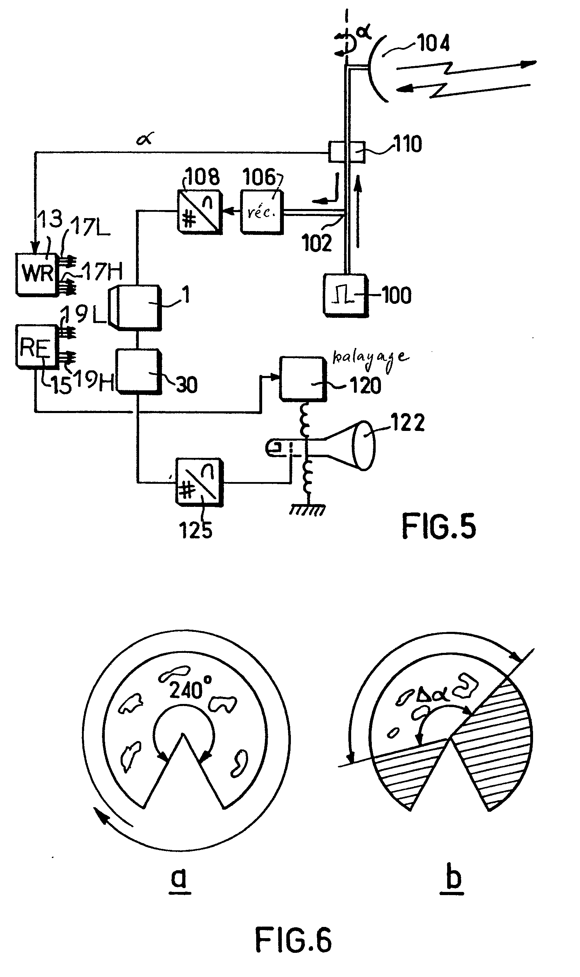

L'invention concerne aussi un radar contenant un tel dispositif d'oubli 30. Un exemple d'un tel radar est montré à la figure 5. Ce radar se compose d'un générateur d'impulsions radar 100 pour fournir des impulsions d'ondes à haute fréquence telles que les hyperfréquences, par l'intermédiaire d'un duplexeur 102, à une antenne 104. L'onde émise par l'antenne 104 est réfléchie par différents obstacles, puis est captée par cette même antenne 104; un récepteur 106 reçoit cette onde qui provient donc de l'antenne 104 et qui passe par le duplexeur 102; ce récepteur 106 fournit sur sa sortie un signal dont l'amplitude dépend de la puissance de l'onde reçue. Ce signal est converti en un code numérique au moyen d'un convertisseur analogique-numérique 108 pour être emmagasiné dans la mémoire 1. Un capteur de position 110 mesure l'angle de rotation α de l'antenne 104; la sortie du capteur est reliée au circuit d'adressage-écriture 13 pour que le code numérique à la sortie du convertisseur soit convenablement enregistré. Le circuit d'adressage lecture 15 coopère avec un circuit de balayage 120; ce circuit 120 permet le balayage d'un tube cathodique 122. Pour faire varier la luminance du spot du tube cathodique, sa grille est reliée à la sortie d'un convertisseur numérique-analogique 125 dont l'entrée est reliée à la sortie de la mémoire 1 à laquelle est rattaché le dispositif d'oubli 30.

Un tel radar fonctionne de la manière suivante.

On suppose d'abord que l'antenne a un balayage circulaire uniforme; ceci est représenté en a à la figure 6. Le tube cathodique doit présenter tout le champ exploré dans la limite d'un secteur utile (240° par exemple). Les données concernant ce secteur utile sont stockées dans la totalité de la mémoire 1.

Par suite du traitement numérique, le champ exploré est décomposé en valeurs discrètes d'angle, de sorte que, pour chacune de ces valeurs, va correspondre un traitement de l'onde réfléchie effectué par le récepteur 106. Le circuit d'adressage d'écriture 13 fournit sur les fils 17H un code correspondant à la valeur de l'angle définissant un rayon vecteur, tandis que le code sur les fils 17L correspond à l'emplacement d'un segment sur le rayon vecteur. Chaque segment est défini par un mot de la mémoire principale. Le code d'adresse ainsi formé permet d'enregistrer les différentes intensités des échos reçus pour les différents points du segment. Les échos reçus pour une seule valeur discrète sont enregistrés segment par segment dans la mémoire 1 pendant les temps WR (voir ligne e de la figure 4). Toute la mémoire 1, par contre, est lue pendant les temps RE; il est possible, ainsi, d'obtenir que la cadence des images visualisées sur le tube cathodique 122 soit bien plus élevée que la cadence d'exploration du champ.

Pour comprendre l'intérêt du dispositif d'oubli 30, on suppose maintenant que le balayage s'effectue selon un secteur d'angle Δα; ceci est représenté en b à la figure 6. Le dispositif d'oubli 30 va

donc œuvrer pour que sur l'écran du tube aucun écho n'apparaisse dans les zones comprises entre le secteur utile de 240° et le secteur d'angle Δα. Ceci est représenté par des hachures à la figure 6.

## Revendications

1. Dispositif d'oubli (30) pour invalider des informations contenues depuis un certain temps dans une mémoire dite principale (1) à laquelle sont rattachés des circuits d'adressage de lecture (15), des circuits d'adressage d'écriture (13) et un circuit de commande de lecture-écriture (9), caractérisé en ce qu'il est formé
par un générateur de rythme d'oubli (35) fournissant des signaux dont la période correspond audit certain temps,
par deux mémoires dites d'oubli (37, 38) dont les entrées d'adressage (39, 40) sont couplées auxdits circuits d'adressage de lecture et d'écriture,
par un circuit d'écriture (45, 46) coopérant avec le circuit de commande de lecture-écriture pour écrire un signal de mise à jour dans les deux mémoires d'oubli en même temps que la mémoire principale est écrite,
par un circuit d'effacement (50, 52) commandé avec le générateur d'oubli pour inscrire tour à tour dans l'une des mémoires d'oubli après le certain temps un signal d'effacement, et
par un circuit de coïncidence de signaux d'effacement (55) branché en sortie des mémoires d'oubli pour commander un circuit d'invalidation (60) branché en sortie de la mémoire principale.

2. Dispositif d'oubli selon la revendication 1 pour lequel la mémoire principale (1) est organisée en mots comportant un certain nombre d'éléments binaires caractérisé en ce que les mémoires d'oubli (37, 38) sont des mémoires organisées en mots comportant un nombre d'éléments binaires inférieur audit certain nombre.

3. Dispositif d'oubli selon la revendication 2, caractérisé en ce que les mémoires d'oubli (37, 38) sont des mémoires organisées en mots à un élément binaire pour lesquelles le signal de mise à jour est constitué par un élément binaire de valeur déterminée tandis que le signal d'effacement est constitué par un élément binaire de valeur opposée à ladite valeur déterminée.

4. L'utilisation d'un dispositif d'oubli (30) selon l'une des revendications 1 à 3 dans un radar formé d'une partie émission (100) pour émettre des impulsions à haute fréquence par l'intermédiaire d'un agencement d'antenne mobile (104) auquel est couplé un capteur de position (110), d'une partie réception (106) pour recevoir par l'intermédiaire dudit agencement d'antenne lesdites impulsions après réflexion sur des obstacles, d'une mémoire d'image pour enregistrer lesdites impulsions en des emplacements définis au moyen du capteur de position et d'un circuit de visualisation (120, 125) pour fournir à un tube cathodique de visualisation (122) des informations prélevées de ladite mémoire principale à un rythme nécessaire pour obtenir une bonne visualisation, de manière que la mémoire d'image constitue ladite mémoire principale (1).

## Claims

1. An invalidation arrangement (30) for invalidating information stored for a certain period of time in a main memory (1) to which read addressing circuits (15), write addressing circuits (13) and a read-write control circuit (9) are connected, characterized in that is formed
by an invalidation rate generator (35) producing signals whose period corresponds to the said certain period of time,
by two invalidation memories (37, 38) whose addressing inputs (39, 40) are coupled to the said read and write addressing circuits,
by a writing circuit (45, 46) associated with the read-write control circuit for writing an up-dating signal into the two invalidation memories at the same that the main memory is written in,
by an erase circuit (50, 52) controlled by the invalidation generator for writing an erase signal alternately into one of the invalidation memories after the certain period of time, and
by an erase signal coincidence circuit (55) which is connected to the output of the invalidation memories for controlling an invalidation circuit (60) connected to the output of the main memory.

2. An invalidation arrangement as claimed in Claim 1, for which the main memory (1) is organized in words comprising a certain number of binary elements, characterized in that the invalidation memories (37, 38) are memories organized in words comprising a number of binary elements lower than the said certain number.

3. An invalidation arrangement as claimed in Claim 2, characterized in that the invalidation memories (37, 38) are memories organized in words consisting of one binary element for which the up-dating signal is formed by a binary element having a predetermined value while the erase signal is formed by a binary element having a value opposite to the said predetermined value.

4. The use of an invalidation arrangement (30) as claimed in one of the Claims 1–3, in a radar comprising a transmit portion (100) for transmitting high-frequency pulses by means of a mobile antenna means (104) to which a position detector (110) is coupled, a receive portion (106) for receiving by means of the said antenna means the said pulses after reflection from obstacles, a picture store for storing the said pulses in defined locations by means of the position detector and a display circuit (120, 125) for supplying to a cathode-ray tube (122) information obtained from the said main memory at a rate necessary for obtaining a good display, such that the picture store constitutes the said main memory (1).

## Patentansprüche

1. Anordnung (30) zum Löschen von für eine feste Zeit gespeicherten Daten in einem Hauptspeicher (1), mit dem Leseadressenschaltungen (15), Schreibadressenschaltungen (13) und eine Lese-Schreibsteuerschaltung (9) verbunden sind, dadurch gekennzeichnet, dass die Anordnung aus einem Löschgenerator (35), der Signale erzeugt, deren Periode der bestimmten Zeitperiode entspricht, aus zwei Löschspeichern (37, 38), deren Adresseneingänge (39, 40) mit den genannten Lese- und Schreibadressenschaltungen gekoppelt sind, aus einer Schreibschaltung (45, 46) die mit der Lese-Schreibsteuerschaltung zusammenarbeitet zum Einschreiben eines Aktualisierungssignals in die zwei Löschspeicher in derselben Zeit, wo der Hauptspeicher eingeschrieben wird, aus einer Löschschaltung (50, 52), die von dem Löschgenerator gesteuert wird zum Einschreiben eines Löschsignals in einem der Löschspeicher nach der bestimmten Zeitperiode, sowie aus einer Löschsignalkoinzidenzschaltung (55) besteht, die mit dem Ausgang der Löschspeicher verbunden ist zur Steuerung einer Löschschaltung (60), die mit dem Ausgang des Hauptspeichers verbunden ist.

2. Eine Löschanordnung nach Anspruch 1, für die der Hauptspeicher (1) wortorganisiert ist mit einer bestimmten Anzahl binärer Elemente, dadurch gekennzeichnet, dass die Löschspeicher (37, 38) wortorganisierte Speicher sind mit einer Anzahl binärer Elemente, die geringer ist als die genannte bestimmte Anzahl.

3. Löschanordnung nach Anspruch 2, dadurch gekennzeichnet, dass die Löschspeicher (37, 38) wortorganisierte Speicher sind, die aus einem binären Element bestehen, für die das Aktualisierungssignal durch ein binäres Element mit einem vorbestimmten Wert gebildet wird, während das Löschsignal durch ein binäres Element mit einem Wert, der dem genannten vorbestimmten Wert entgegengesetzt ist, gebildet ist.

4. Die Verwendung einer Löschanordnung (30) nach einem der Ansprüche 1 bis 3 in einem Radarsystem mit einem Sendeteil (100) zum Ausstrahlen von HF-Impulsen mittels einer beweglichen Antenne (104) mit der ein Positionsdetektor (110) gekoppelt ist, mit einem Empfangsteil (106) zum mittels der genannten Antenne Empfangen der genannten Impulse nach Reflexion an Gegenständen, mit einem Bildspeicher zum Speichern der genannten Impulse an definierten Stellen mittels des Positionsdetektors und mit einer Bildwiedergabeschaltung (120, 125) zum einer Bildröhre (122) Liefern von Information, die aus dem genannten Hauptspeicher erhalten worden ist mit einer Frequenz, die notwendig ist um eine gute Wiedergabe zu erhalten, dadurch gekennzeichnet, dass der Bildspeicher den genannten Hauptspeicher (1) bildet.

0 066 319

FIG.1

FIG.2

7

FIG.3

0 066 319

a (23)

b (53,54) "1" "0"

c (9) "1" "0"

d (45,46) "1" "0"

e

WR

RE

FIG. 4

FIG.5

a          b

FIG.6